# EUROPEAN PATENT SPECIFICATION

(11) **EP 3 761 261 B1**
(45) Date of publication and mention of the grant of the patent: **07.06.2023**
(21) Application number: 19184384.6
(22) Date of filing: 04.07.2019
(51) Int. Cl.: G06T 3/40, G06T 5/40

(54) **COMBINING ANATOMICAL IMAGE DATASETS INTO ONE COMBINED IMAGE DATASET**
KOMBINIERUNG VON ANATOMISCHEN BILDDATENSÄTZEN ZU EINEM KOMBINIERTEN BILDDATENSATZ
COMBINAISON D'ENSEMBLES DE DONNÉES D'IMAGES ANATOMIQUES DANS UN ENSEMBLE DE DONNÉES D'IMAGES COMBINÉ

(43) Date of publication of application: 06.01.2021
(73) Proprietor: Siemens Healthcare GmbH, 91052 Erlangen (DE)
(72) Inventor: Kartäusch, Ralf, 91088 Bubenreuth (DE); Paul, Dominik, 91088 Bubenreuth (DE); Zeller, Mario, 91054 Erlangen (DE)

(56) References cited:
- C. DECARLI ET AL: "Local histogram correction of MRI spatially dependent image pixel intensity nonuniformity", JOURNAL OF MAGNETIC RESONANCE IMAGING, vol. 6, no. 3, 1 May 1996 (1996-05-01), pages 519-528, XP55622602, US
- S. SIVARAM KAUSHIK ET AL: "External calibration of the spectral coverage for three-dimensional multispectral MRI", MAGNETIC RESONANCE IN MEDICINE., vol. 76, no. 5, 24 November 2015 (2015-11-24), pages 1494-1503, XP055536772, US
- UROS VOVK ET AL: "A Review of Methods for Correction of Intensity Inhomogeneity in MRI", IEEE TRANSACTIONS ON MEDICAL IMAGING, IEEE, NJ, US, vol. 26, no. 3, 1 March 2007 (2007-03-01), pages 405-421, XP011171979,
- HEIDEMANN R M ET AL: "VD-AUTO-SMASH IMAGING", MAGNETIC RESONANCE IN MEDICINE, JOHN WILEY & SONS, INC, US, vol. 45, no. 6, 1 June 2001 (2001-06-01), pages 1066-1074, XP001065127,
- JAKOB P M ET AL: "AUTO-SMASH: A SELF-CALIBRATING TECHNIQUE FOR SMASH IMAGING", MAGNETIC RESONANCE MATERIALS IN PHYSICS, BIOLOGY AND MEDICINE, CHAPMAN AND HALL, LONDON, GB, vol. 7, no. 1, 1 November 1998 (1998-11-01), pages 42-54, XP001012838,

## Description

The present invention concerns a method of combining at least two anatomical image datasets into one combined image dataset, a storage medium, and magnetic resonance apparatus.

To generate images of larger volumes different ways of acquiring data are known in medical imaging. Using a CT apparatus, the subject is positioned in a scanner which usually covers only a part of the subject. A typical MR apparatus is longer, but the homogeneous area is also limited to a small volume compared to the length of the MR apparatus.

Therefore, to cover the whole body or at least a larger volume than the covered or homogeneous volume it is known to drive the subject through the scanner. To do so, a first part of the subject is examined, then it is positioned again so that a second part is covered and can be examined and so on until the last part has been examined.

To change the position of the subject usually a table is driven along an axis which is the longitudinal axis of the scanner.

In MRI several adjustments have to be done after the movement of the subject. First the resonance frequency has to be determined. Second the volume has to be shimmed. Third, if a coil array is used for the data acquisition, an image dataset for a surface coil intensity correction has to be acquired. Further adjustments may be carried out additionally. For all adjustments, calibration datasets are acquired, respectively.

After the positioning of the subject and the adjustments where necessary one or more anatomical datasets can be measured. An anatomical dataset shows an interesting portion of the subject and may show functional or morphological or any other interesting information. An anatomical image dataset usually has a higher resolution than the calibration datasets.

After the acquisition of the raw data the image datasets have to be processed to generate images. In case of MRI the datasets must be Fourier-transformed.

Then the images taken at different positions are combined to combined images to cover a greater volume of the subject in one image. There the problem can arise that the signal intensities of the combined images do not fit. Then one or more parts of the combined image show a weak contrast or seem to be darker than other parts. These parts have their origin in the images used for producing the combined images and are caused by a different scaling of original images.

C. DECARLI ET AL: "Local histogram correction of MRI spatially dependent image pixel intensity nonuniformity", JOURNAL OF MAGNETIC RESONANCE IMAGING, vol. 6, no. 3, 1 May 1996 (1996-05-01), pages 519-528 disclose a method to reduce spatially dependent pixel intensity nonuniformity of an MRI image. A correction this nonuniformity is performed post-hoc from data contained within the image.

The publications Heidemann et al: "VD-AUTO-SMASH Imaging", Magnetic Resonance in Medicine, John Wiley & Sons, lnc., US, vol. 45, no. 6, 1 June 2001, pages 1066-1074 and Jakob et al: "AUTO-SMASH: A Self-Calibrating Technique for SMASH Imaging", Magnetic Resonance Materials in Physics, Biology and Medcine, Chapman And Hall, London, GB, vol. 7, no. 1, 1 November 1998, pages 42-54 describe a parallel imaging techniques using coil sensitivity information obtained during the actual scan.

Therefore, there is a need for a method of generating a combined image dataset the combined image dataset having reduced scaling problems.

These needs are satisfied in a method according to the invention a method of combining at least two anatomical image datasets into one combined image dataset having the steps:
a) providing a first calibration image dataset of a first examination volume of the subject having at least two slices,
b) providing the first anatomical image dataset of the first examination volume of the subject,
c) providing a second calibration image dataset of a second examination volume of the subject having at least two slices,
d) providing the second anatomical image dataset of the second examination volume of the subject,
e) wherein the calibration image datasets are shifted one against each other in one imaging direction,
   characterized in that
f) a frequency distribution is calculated for a parameter of at least one slice of each calibration image dataset, and at least one correction factor for correcting signal intensities of at least one anatomical image dataset is calculated using the frequency distributions,
g) generating a corrected second anatomical image dataset by adjusting the signal intensities of at least a region of the second anatomical image dataset using the correction factor, and
h) combining the first anatomical dataset and the corrected second anatomical image dataset to a combined image dataset.

Preferably, the method comprises the step making said combined image dataset available in electronic form as a data file.

The first calibration image dataset and the second calibration image dataset are calibration image datasets as described above. It may be any image dataset that can be used for calibration purposes. They only have to fulfill the requirement to have at least two slices.

In a first embodiment the calibration image datasets are multi-slice image datasets. Then each calibration image dataset consists of several two-dimensional images which are shifted in slice selection direction.

In a second embodiment the calibration image datasets are three-dimensional image datasets. Then the phase encoding steps in the slice selection direction create the slices of the image. In this embodiment the phase encoding direction and the slice selection direction may be distinguished only by definition because there are two phase encoding directions.

In a first embodiment the anatomical image datasets are multi-slice image datasets. In a second embodiment the anatomical image datasets are three-dimensional image datasets.

Preferably the anatomical image datasets and the calibration image datasets have the same type of image, e.g. both are multi-slice image datasets.

The calibration image datasets are shifted in one direction. That means that they show different examination volumes of the subject. This may be caused by a movement of the subject between the measurements of the calibration image datasets.

Every slice of a calibration image dataset consists of a plurality of signal intensities, phase values, and so on. Therefore, a frequency distribution of any image parameter can be calculated for every slice.

If one calculates at least one frequency distribution for each calibration image dataset, these frequency distributions can be compared. The comparison leads to a correction factor, which is caused by a difference between the frequency distributions. It can be used then to adapt the signal intensities of the calibration images.

Moreover, and this is the core of the invention, the correction factor may be used to adapt the signal intensities of the first anatomical image dataset and the second anatomical image dataset. The reason causing the different scaling is assumed to happen during the shift of the examined volume of the subject. Hence the correction factor can be received from every pair of images and not only by the anatomical image datasets itself.

A frequency distribution is calculated for a parameter of at least one slice of each calibration image dataset, and a correction factor for correcting signal intensities of at least one anatomical image dataset is calculated.

Using the correction factor a corrected and therefore normalized second anatomical image dataset can be created. This normalization occurs with regard to the first anatomical image dataset. Since there is no absolute signal intensity to that a normalization could take place the first calibration image dataset and first anatomical image dataset is taken respectively. Of course, it is the calibration image datasets where the frequency distributions are calculated from, but in the same way the anatomical image datasets are respected.

Preferably, the number of correction factors to be calculated equals to the number of anatomical image datasets minus 1 assumed there is one anatomical image dataset per table position during examination. In other words, the number of correction factors to be calculated equals to the number of table positions during examination minus 1.

It has to be noted that a rule can be set up to choose one of the calibration image datasets being the first calibration image dataset. It may be the first one that is acquired or may be one in the center or may be chosen by a user. Moreover, it could be randomly chosen. Finally, one of the calibration image datasets has to be the first image dataset. The further calibration image datasets are normalized directly or indirectly to the first calibration image dataset.

Preferably, the anatomical image datasets are magnetic resonance image datasets. Moreover, the calibration image datasets may be magnetic resonance image datasets.

Advantageously a histogram is used as frequency distribution. Moreover, the signal intensities of at least one slice are used to create the histogram of each calibration image dataset. The histograms of the calibration image datasets have similar profiles that mainly differ in a possible shift of the profiles. This shift is caused by the different scaling of the underlying images. A correction factor to correct the scaling can be directly derived from the histograms.

Preferably the first calibration image dataset and the second calibration image dataset are image datasets for surface coil intensity correction. In parallel imaging coil arrays of surface coils are used to acquire data. Using a coil array the coils can collect the data parallel at the same time. The surface coils can cover overlapping volumes and produce a higher SNR than larger, more distant coils. But the signal acquired with a surface coil is not uniform. Hence the signal has to be corrected for a first time to compensate the so called surface coil flare. This has to be done if a coil array is used, independent of the acquisition of second calibration image datasets or anatomical image datasets. It has to be done even if there is only one anatomical image dataset.

If a coil array is used that covers a larger volume than the isotropic volume inside the MR scanner the patient table is moved and the same experiments are executed several times.

Then also the calibration measurements are made several times.

It has to be noted that several different calibration image datasets and anatomical image datasets may be acquired for every position of the table. Only one of the calibration image datasets is chosen, for example the above mentioned image dataset for surface coil intensity correction. The calculated correction factor for a table position may be applied to several anatomical images of that position, e.g. to a T1-map dataset and a FLASH image dataset and a turbo spin echo (TSE) image dataset.

Advantageously an anatomical image dataset is assigned to one calibration image dataset. The assignment is achieved by the position of the patient table which has to be the same. If the patient table is moved to a new position, also at the beginning, calibration measurements are executed and the desired calibration image dataset is acquired. Then one or more anatomical image datasets are acquired. As long as no action is taken that requires a new calibration the anatomical image or images are assigned to the current calibration image dataset.

Preferably the first the anatomical image datasets is assigned to a correction factor being 1. With other words the first calibration image dataset is taken as the image dataset the signal intensities of the further image datasets are normalized to. The signal intensities of the calibration image dataset and the anatomical image dataset are assumed to be correlated. Then the signal intensities of the first anatomical image dataset may remain unchanged which corresponds to a correction factor of 1.

Advantageously at least three anatomical image datasets and respective calibration image datasets are provided. The described normalization of signal intensities can be carried out for more than two calibration image datasets and anatomical image datasets. In this case one of the three or more calibration image datasets has to be chosen to be the first calibration image dataset. The second calibration image dataset must be adjacent to the first calibration image dataset.

If the third calibration image dataset is adjacent to the second calibration image dataset, the second calibration image dataset and the third calibration image dataset may be used to generate a correction factor for the third anatomical image dataset.

If the third calibration image dataset alternatively is also adjacent to the first calibration image dataset, the first calibration image dataset and the third calibration image dataset are used to calculate a correction factor for the third anatomical image dataset.

In case of three or more images it is advantageous to define one of the image datasets in the center being the first calibration image dataset and first anatomical image dataset. Then the calculation of the correction factors start with the same calibration image dataset.

If one of the calibration image datasets at the end is chosen to be the first calibration image dataset the adjacent calibration image dataset is the second calibration image dataset and a correction factor cf1-2 for the second anatomical image dataset can be calculated using the first calibration image dataset and the second calibration image dataset.

The third calibration image dataset is the next following the second calibration image dataset in line. A second correction factor cf2-3 is generated using the second calibration image dataset and the third calibration image dataset. To have a full correction factor for the third anatomical image dataset the correction factor cf1-2 and the second correction factor cf2-3 have to be multiplied.

Advantageously, the calculation of the correction factor is executed using one slice of each calibration image dataset. Preferably, the neighboring slices or overlapping slices are taken. The slices are neighboring with regard to the position in the examined subject. In these slices the signal intensity distribution should be the same or nearly the same. Using a frequency distribution one can avoid errors due to changing extreme values.

Alternatively, additional slices are used for the calculation of the histograms until a predefined condition is fulfilled. For example, a given number of signal intensity values has to be existent. Then starting with the neighboring slices adjacent slices of the calibration image dataset are taken to calculate the frequency distribution of a calibration image dataset.

Preferably, the same number of slices is used for generating the frequency distributions. For example, three slices are used for the first calibration image dataset as well as three slices for the second calibration image dataset.

The sequence used to acquire the calibration image datasets may be any sequence, but it is preferred to use a gradient echo sequence, e.g. a FLASH sequence.

The sequence used to acquire the anatomical images is not limited to any special sequence.

The neighboring slices used for normalization should have the same resolution, e.g. cover the same volume and have the same number of data points, which means the covered side lengths being equal. This avoids additional steps in the normalization process.

The anatomical image datasets and/or calibration image datasets do not necessarily cover identically large volumes.

Nevertheless, it is preferred that the first calibration image dataset has the same resolution like the second calibration image dataset and like the third calibration image dataset and so on. In case of a multi-slice calibration image dataset the first calibration image dataset may have six slices, the second one seven slices and the third one again six slices. But if they have an equal resolution in read and phase direction and slices having equal thickness the neighboring slices have the same resolution.

Furthermore, it is preferred that the first anatomical image dataset has the same resolution like the first anatomical calibration image dataset and like the second anatomical image dataset and so on.

The anatomical image datasets and the calibration image datasets may have the same resolution. Alternatively, the anatomical image datasets have a higher resolution in at least one direction. Usually the calibration image datasets have a lower resolution than the anatomical image datasets.

Advantageously only volume elements, also called voxels, lying over a threshold are considered. Then the noise signal is respected neither calculating the correction factor nor being adjusted.

Preferably, the slices used for the calculation of a correction factor are adjacent slices of two neighboring calibration image datasets. Within these slices there should be no or not a big difference between the signal intensities as mentioned above.

Advantageously, the table supporting the subject has had different positions when the calibration image datasets for normalizing the signal intensities have been acquired. Basically, the different examination volumes could exist the table having the same position. Then it was easier if one would acquire one image dataset, either calibration image dataset or anatomical image dataset, covering the whole volume and use it for normalization purposes.

Preferably, the calibration image datasets and/or anatomical image datasets cover more than 75 % of the homogeneous volume, at least in slice selection direction, of a magnetic resonance apparatus the image datasets being acquired with.

Advantageously the examination volume of the subject to be examined is at least in one direction larger than the homogeneous volume of the scanner. Then several scans at different table positions have to be acquired.

Preferably, the calibration image datasets and/or anatomical image datasets have been acquired using a different subset of a receive coil array. The first anatomical image dataset and the first calibration image dataset have been acquired with a first subset of the receive coil array, the second anatomical image dataset and the second calibration image dataset have been acquired with a second subset of the receive coil array, and so forth.

In accordance with another aspect of the invention a magnetic resonance apparatus is disclosed comprising:
- an MR data acquisition scanner comprising an RF transmitter and an RF receiver and a gradient coil arrangement,
- a memory in which image datasets are stored,
- a computer having access to said memory and being configured to read said image datasets from said memory, and
- said computer being configured to carry out the method described above.

Every of the embodiments described with regard to the method also can be realized in the magnetic resonance apparatus.

In accordance with another aspect of the invention a non-transitory computer-readable data storage medium encoded with programming instructions is disclosed, said storage medium being loaded into a computer system of a magnetic resonance (MR) apparatus that comprises an MR data acquisition scanner having a radio-frequency (RF) transmitter, an RF receiver, a gradient coil arrangement, and a memory, said programming instructions causing said computer system to carry out the method described above.

Every of the embodiments described with regard to the method also can be realized in the data storage medium.

Further details of the invention are provided below.

Parts that correspond to one another are labeled with the same reference characters in all figures.
- Fig. 1: shows an embodiment of a magnetic resonance apparatus,
- Fig. 2: shows a positioning of image datasets,
- Fig. 3: shows a magnetic resonance sequence diagram,
- Fig. 4: shows three multi-slice calibration image datasets,
- Fig. 5: shows a first histogram,
- Fig. 6: shows a second histogram,
- Fig. 7: shows a procedure diagram of generating a combined image,
- Fig. 8: shows a procedure diagram of normalizing anatomical image datasets, and
- Fig. 9: signal intensities three single anatomical image datasets and a combined anatomical image dataset.

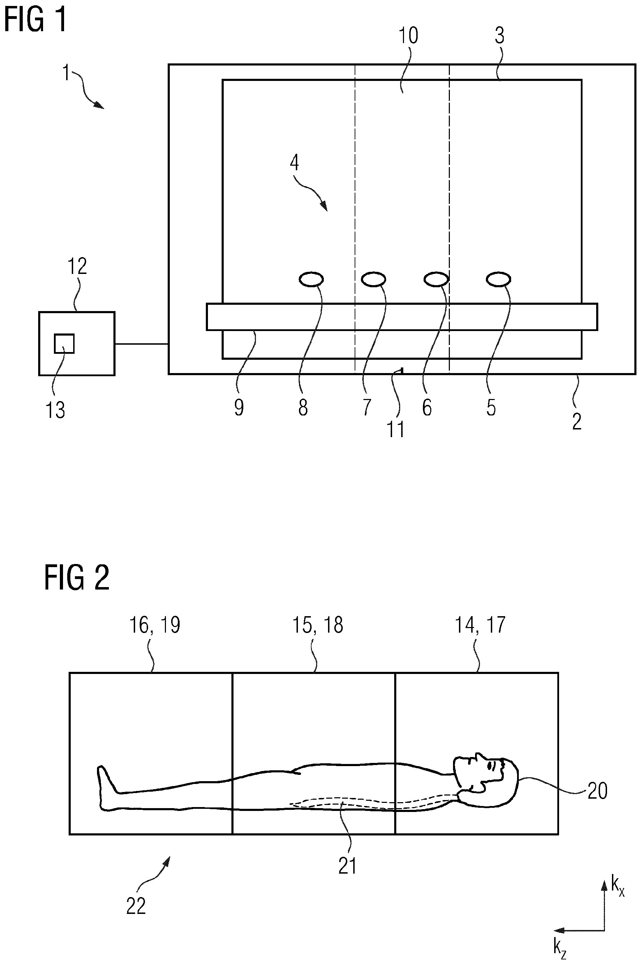

FIG. 1 shows a magnetic resonance apparatus 1. The magnetic resonance apparatus 1 has a scanner 2. A transmit coil arrangement 3 is part of the scanner 2. The transmit coil arrangement 3 is usually designed as a body coil, and thus consists of a single coil.

Additionally, the magnetic resonance apparatus 1 has a receive coil arrangement 4. The receive coil arrangement 4 is designed as a coil array having coils 5, 6, 7 and 8.

The receive coil arrangement 4 usually is laid on a movable patient table 9 and is positioned at least partly within the homogeneous area 10 of the scanner 2. The homogeneous area 10 is marked with dashed lines.

The length of a spine is longer than the length of the homogeneous area 10. To create an image of the spine the acquisition has to be split into several measurements or images, each of them showing a part of the spine which is positioned in the homogeneous area 10. The center 11 of the homogeneous area 10 is marked by a dash.

A control computer 12 controls the operation of the magnetic resonance apparatus 1.

The magnetic resonance apparatus 1 also has a non-transitory data storage medium 13 as part of the control computer 12 or independent thereof, on which computer code for carrying out magnetic resonance measurements is stored.

The coil array 4 is used only to read out the measurement signal which can be an echo signal. The coils 5, 6, 7 and 8 of the coil array 4 read out the measurement signal at the same time.

Further components of the magnetic resonance apparatus 1, such as gradient coils are not shown, for clarity.

Fig. 2 shows an exemplary positioning of calibration image datasets 14, 15 and 16 and anatomical image datasets 17, 18 and 19. The covered volumes for the calibration image dataset 14 and the anatomical image dataset 17 are preferably identical. Both cover the head 20 and the upper region of the spine 21. They cover the homogeneous area 10 completely to keep the measurement time as short as possible.

Also the calibration image dataset 15 and the anatomical image dataset 18 cover the identical volume, here the center of spine 21. This also holds for calibration image dataset 16 and the anatomical image dataset 19 which cover the lower end of spine 21 of the subject 22 to be examined.

The calibration image datasets show different volumes of subject 22, but have been acquired in the same homogeneous area 10. Hence table 10 has been moved after the acquisition of calibration image dataset 14 and anatomical image dataset 17 to measure calibration image dataset 15 and anatomical image dataset 18. Then it has been moved again to acquire calibration image dataset 16 and anatomical image dataset 19.

Fig. 2 also shows a possible arrangement of the axis. The readout axis kx may be arranged upwards, the slice selection axis kz parallel to the longitudinal axis of scanner 2 and the phase encoding axis points into the sheet.

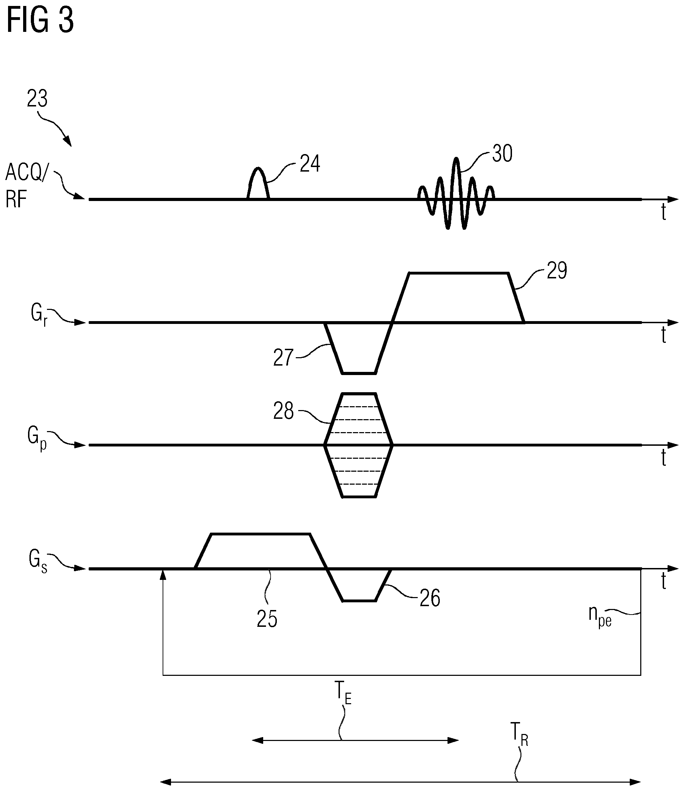

Fig. 3 shows an exemplary sequence diagram 23 of a FLASH sequence. Axis RF shows the RF pulses and acquisition windows, axis Gᵣ the gradients in read direction, axis Gₚₑ the gradients in phase encoding direction and axis Gₛ the gradients in slice selection direction. They correlate to the axis kx, ky and kz shown in Fig. 2 in the known manner.

Excitation pulse 24 is the only RF pulse applied in the shown sequence diagram 23. Slice selection gradient 25 is applied at the same time to select a defined slice in subject 22. It is known to use an additional slice rephasing gradient 26 to compensate the dephasing fraction of the slice selection gradient 25.

A dephasing gradient 27 in readout direction may be applied along with the slice rephrasing gradient 26 to get a minimal echo time T_{E}. Also the phase encoding gradient 28 may be applied at the same time.

In readout direction Gᵣ a readout gradient 29 is applied after the dephasing gradient 27. This generates a gradient echo 30, which is acquired.

All steps beginning at one excitation pulse, here RF pulse 24, to the next excitation pulse are part of an excitation cycle 31. The length of an excitation cycle is the repetition time T_{R}.

The excitation cycle is repeated nₚₑ times, one repetition for one k-line of k-space which has to be acquired parallel by the coils 5, 6, 7 and 8. Due to the usage of coil array 4 the number of excitation cycles is reduced compared to the resolution of the image datasets 14, 15 and 16, because additional k-lines are generated to improve the resolution.

After the acquisition of a first slice, the measurement is repeated with an adapted slice selection gradient 25 to acquire an additional slice. All in all, the acquisition is repeated nₛₗ times, nₛₗ being the number of slices to be acquired. Hence Fig. 3 shows an acquisition scheme for a multi-slice calibration image dataset. Of course, also three-dimensional calibration image datasets could be used. Then also the slice selection gradient 25 would be stepped through like the phase encoding gradient 28. Additionally, its strength would be chosen so that the complete volume was excited in every acquisition and not only a slice.

The FLASH sequence diagram 23 is an exemplary sequence diagram for the acquisition of a calibration image dataset. Of course, other sequences could be used as well.

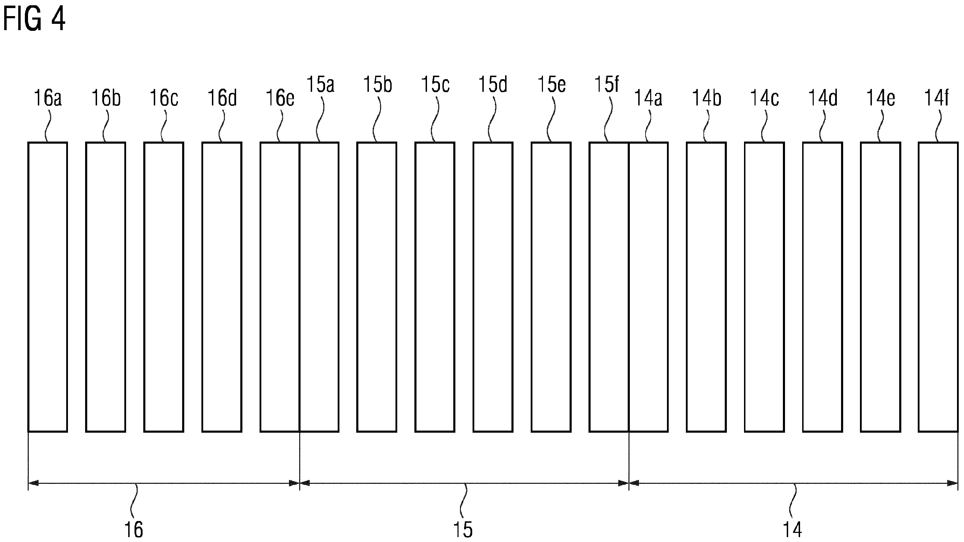

Fig. 4 shows the three calibration image datasets 14, 15 and 16 being multi-slice image datasets. Calibration image dataset 14 has slices 14a, 14b, 14c, 14d, 14e and 14f. Calibration image dataset 15 has slices 15a, 15b, 15c, 15d, 15e and 15f. Calibration image dataset 16 has one slice less and therefore slices 16a, 16b, 16c, 16d, and 16e. Nevertheless, slices 14a, 14b, 14c, 14d, 14e, 14f, 15a, 15b, 15c, 15d, 15e, 15f, 16a, 16b, 16c, 16d, and 16e have the same resolution. May calibration image dataset 14 be chosen as first calibration image dataset and calibration image dataset 15 as second calibration image dataset. Since there is only one neighboring calibration image dataset to calibration image dataset 14, this neighboring calibration image dataset has to be the second calibration image dataset 15. The first calibration image dataset 14 and the second calibration image dataset 15 have neighboring slices 14a and 15f. Alternatively, slices 14a and 15f may overlap slightly. Of course, slices 14a and 15f could overlap completely, too. This is usually not made to save measurement time.

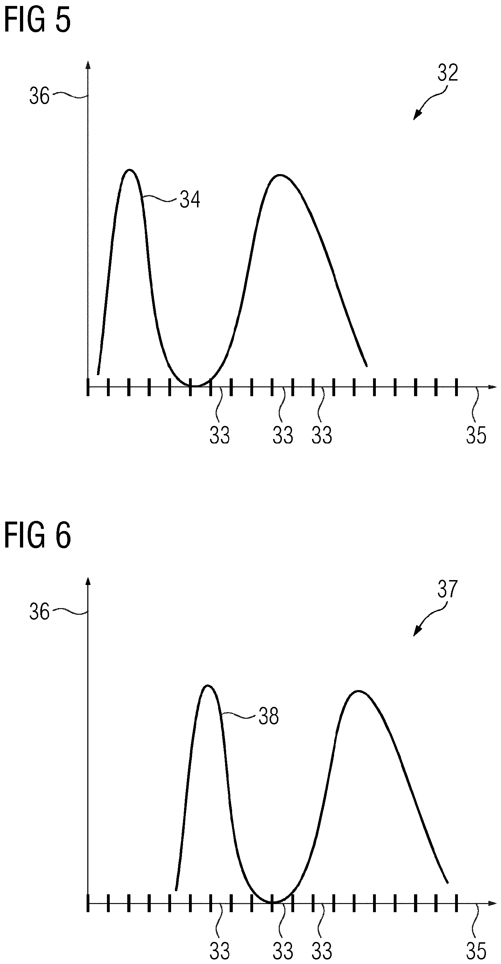

For slice 14a, in particular for its signal intensities, a histogram 32 is calculated which is shown in Fig. 5. The bins 33 to separate the signal intensities are preferably set before. Curve 34 of histogram 32 has an appearance that could be as shown in Fig. 5.

Axis 35 shows the bins 33 of the signal intensities and axis 36 the number of signal intensities within the bin.

Fig. 6 shows a histogram 37 generated from the signal intensity values of slice 15f. The bins 33 are identically chosen.

Curve 38 of histogram 37 is shifted in the direction of axis 35 compared to curve 34. This shift should not be there because slices 14a and 15f show neighboring or slightly overlapping regions of subject 22. Hence a wrong scaling is assumed to be the reason for the shift. To overlay curves 34 and 38 the signal intensity values of slice 15f have to be multiplied with a correction factor which may be called cf1-2. This correction factor cf1-2 can be derived from histograms 32 and 37 as follows:
One extreme value could be chosen in the first histogram 32 and the second histogram 37, e.g the first maximum. Then the number of the respective bins is divided, here the third bin in Fig. 5 and the sixth bin in Fig. 6. The correction factor cf1-2 is received by dividing the number of the second histogram 37, here six, by the number of the first histogram, here three. Hence the correction factor cf1-2 was 2.

Alternatively, one can step through a number of correction factors, apply on the signal intensities of the second calibration image dataset 15 and calculate a respective histogram 37 for every correction factor. Then the difference of histograms 32 and 37 may be computed. The correction factor producing the least difference is then taken as correction factor cf1-2.

Bins 33 are identically chosen and therefore have a certain width which represents relative signal intensity values.

It has to be mentioned here that according to the invention the correction factor cf1-2 is derived from two calibration image datasets 14 and 15 but will be applied on the anatomical image dataset 18.

In the same way a correction factor cf2-3 can be derived from slices 15a and 16e which are also neighboring slices of neighboring calibration image datasets 15 and 16.

It has to be noted that anatomical image dataset 19 has to be multiplied with both correction factors cf1-2 and cf2-3 to be normalized to anatomical image dataset 17, because correction factor cf2-3 only includes the difference to anatomical image 18.

Alternatively, a correction factor cf1-3 could be calculated by using a second image calibration dataset 15' the signal intensity values already have been multiplied with the correction factor cf1-2.

Of course, in the same manner more image datasets could be normalized.

Obviously, correction factor cf1-2, that normalizes slice 15f to slice 14a is used to normalize the signal intensity values of the second anatomical image 18 to those of the first anatomical image 17 and the product of the correction factors cf1-2 and cf2-3 to normalize the signal intensity values of the third anatomical image 19 to those of the first anatomical image 17.

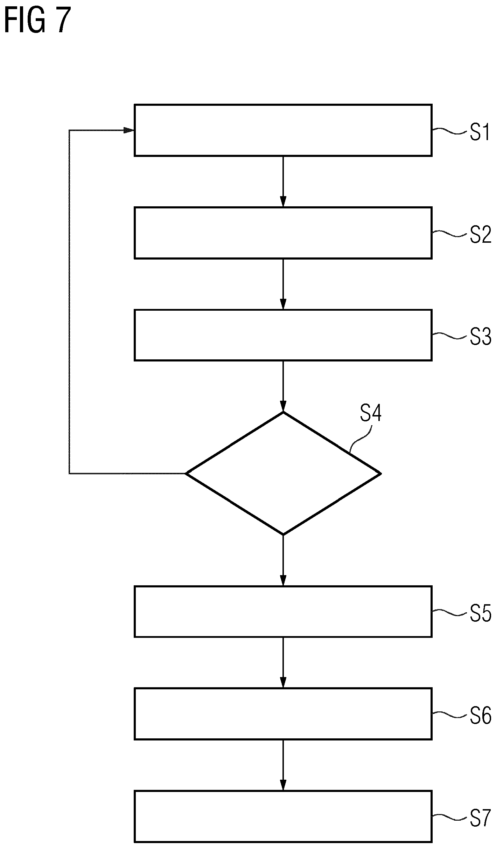

Fig. 7 shows a procedure diagram of generating a combined image dataset. In step S1 table 10 is driven to the desired examination position. There several calibration measurements are executed, e.g. in step S2 a calibration image dataset 17 for surface coil intensity correction. After the calibration is done additional experiments can be done in step S3 like the acquisition of the raw data of at least one anatomical image dataset 14.

In step S4 it is decided if more positions have to be examined. If so, steps S1 to S3 are repeated. If not, the raw data of the anatomical image datasets can be processed to image datasets in step S5 e.g. by carrying out a Fourier transform.

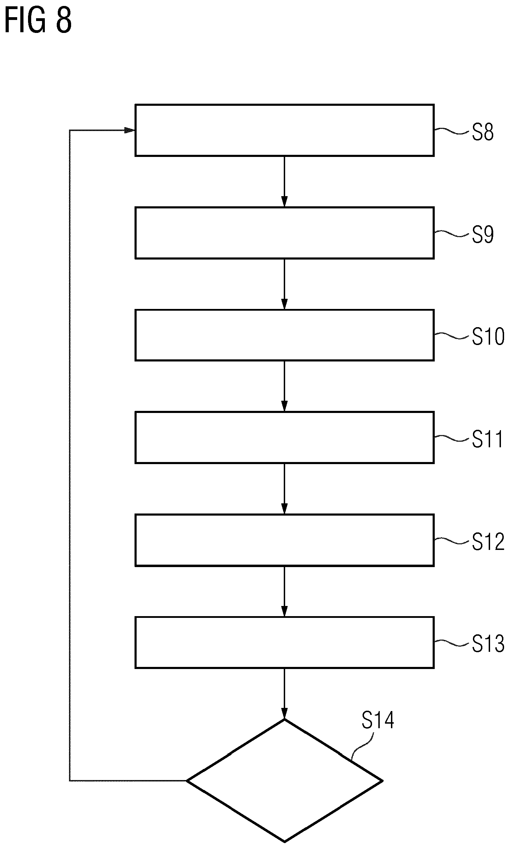

In step S6 the anatomical image datasets 17 to 19 are normalized by normalizing neighboring slices of the respective calibration image datasets 14 to 16 as described above. This step is described with more detail in Fig. 8.

The normalized anatomical images 17 to 19 are then combined to a combined image in step S7.

Fig. 8 shows a procedure diagram of normalizing images using calibration image datasets.

In step S8, one of the calibration image datasets 14 to 16 is chosen to be the first calibration image dataset. Alternatively, one of the anatomical image datasets could be chosen or one of the positions of table 10. Then the datasets belonging to the same position of table 10 are also "first" ones. That means if calibration image dataset 14 is the first calibration image dataset, automatically anatomical image dataset 17 is the first anatomical image dataset.

In step S9 the second calibration image dataset and anatomical image dataset are selected. The only condition to be fulfilled is the second calibration image dataset being adjacent to the first calibration image dataset. Then automatically two adjacent slices exist. In the example above only calibration image dataset 15 can be taken as second calibration image dataset because it is the only neighbor of the first calibration image dataset 14. Again, anatomical image dataset 18 is automatically the second anatomical image dataset.

After the selection of the calibration image datasets in step S10 a histogram of slice 14a is generated. Slice 14a is that one of all slices of the first calibration image dataset 14 which is adjacent to the second calibration image dataset 15. For the same reason in step 11 a histogram 38 is generated for slice 15f.

The curves 34 and 38 of histograms 32 and 37 are compared in step S12 to calculate correction factor cf1-2.

In step S13 the signal intensities of the second anatomical image 15 are normalized to the signal intensities of the first anatomical image 14 by multiplying the signal intensity values of each voxel with the correction factor cf1-2.

In step S14 it is decided if additional images have to be normalized. Then steps 8 to 13 are repeated with different pairs of calibration image datasets and anatomical image datasets.

If these steps are finished, the signal intensities of the further anatomical image datasets are normalized to the first anatomical image dataset 17.

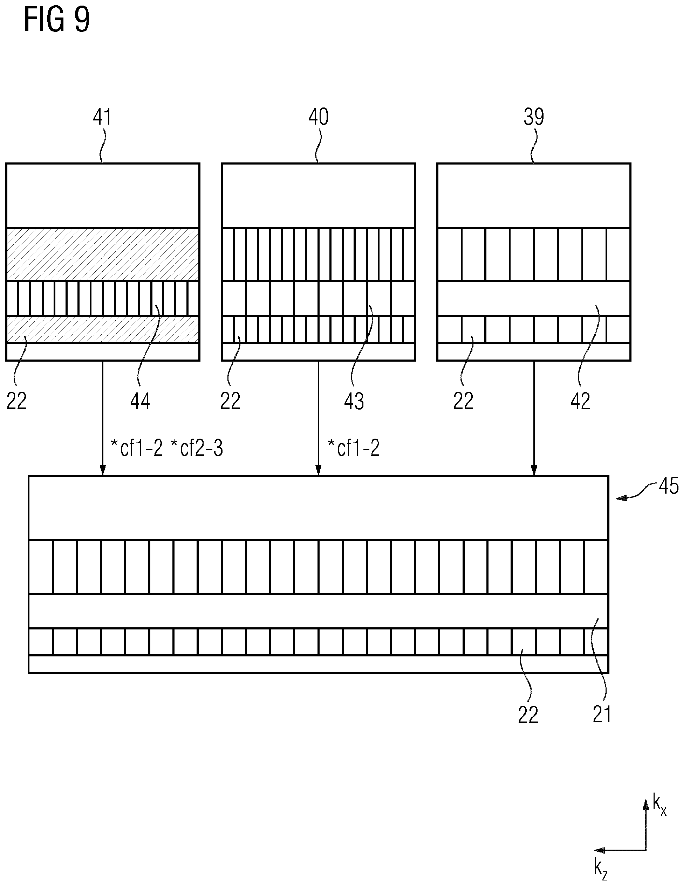

Fig. 9 shows a schematic normalization for a first anatomical image dataset 39, a second anatomical image dataset 40 and a third anatomical image dataset 41.

First anatomical image dataset 39 shows an upper part 42 of spine 21, second anatomical image dataset 40 the central part 43 and third anatomical dataset 41 a lower part 44 of spine 21.

It has to be noted that only a central layer of image datasets 39, 40 and 41 is shown for sake of clarity.

Obviously anatomical image datasets 39, 40 and 41 are differently scaled, because neighboring slices show different signal intensities what is shown by the different shadows.

Using the correction factors cf1-2 and cf2-3 as shown above anatomical image datasets 39, 40 and 41 can be combined to a combined image dataset 45 having normalized signal intensities without intensity steps crossing the image borders of image datasets 39, 40 and 41.

## Claims

1. A computer-implemented method of combining at least a first anatomical image dataset (17, 39) of a subject (22) and a second anatomical image dataset (18, 40) of the same subject (22) into one combined image dataset (45) comprising:
a) providing a first calibration image dataset (14) of a first examination volume of the subject (22) having at least two slices (14a, 14b, 14c, 14d, 14e, 14f),
b) providing the first anatomical image dataset (17, 39) of the first examination volume of the subject (22),
c) providing a second calibration image dataset (15) of a second examination volume of the subject (22) having at least two slices (15a, 15b, 15c, 15d, 15e, 15f),
d) providing the second anatomical image dataset (18, 40) of the second examination volume of the subject (22),
e) wherein the calibration image datasets (14, 15, 16) are shifted one against each other in one imaging direction (kz),
**characterized in that**
f) a frequency distribution (32, 37) is calculated for a parameter of at least one slice (14a, 15a, 15f, 16e) of each calibration image dataset (14, 15, 16), and at least one correction factor (cf1-2, cf2-3) for correcting signal intensities of at least one anatomical image dataset (18, 19, 40, 41) is calculated using the frequency distributions (32, 37),
g) generating a corrected second anatomical image dataset by adjusting the signal intensities of at least a region of the second anatomical image dataset (18, 40) using the correction factor (cf1-2, cf2-3), and
h) combining the first anatomical dataset (17, 39) and the corrected second anatomical image dataset to a combined image dataset (45)
wherein a table (9) supporting the subject (22) has different positions during the acquisition of the calibration image datasets (14, 15, 16) and the respective anatomical image datasets (17, 18, 19, 39, 40, 41).

2. The method of claim 1, wherein the frequency distributions are calculated for neighboring slices (14a, 15a, 15f, 16e) of neighboring calibration image datasets (14, 15, 16).

3. The method of one of the preceding claims, wherein a histogram (32, 27) is used as frequency distribution.

4. The method of one of the preceding claims, wherein the first calibration image dataset (14) and the second calibration image dataset (15) are image datasets for surface coil intensity correction.

5. The method of one of the preceding claims, wherein the anatomical image datasets (17, 18, 19, 39, 40, 41) are assigned to different calibration image datasets (14, 15, 16).

6. The method of claim 5, wherein the first anatomical image dataset (17, 39) is assigned to a correction factor being 1.

7. The method of one of the preceding claims, wherein at least three anatomical image datasets (17, 18, 19, 39, 40, 41) and respective calibration image datasets (14, 15, 16) are provided.

8. The method of one of the preceding claims, wherein the calculation of the correction factor (cf1-2, cf2-3) is executed using one neighboring slice (14a, 15a, 15f, 16e) of each calibration image dataset (14, 15, 16).

9. The method of one of the preceding claims, wherein the signal intensity is used as parameter to generate the frequency distributions (32, 37).

10. The method of one of the preceding claims, wherein the resolution of the anatomical image datasets (17, 18, 19, 39, 40, 41) is higher in at least in spatial direction than the resolution of a calibration image dataset (14, 15, 16).

11. The method of one of the preceding claims, wherein the calibration image datasets (14, 15, 16) have been acquired with different subsets of a receive coil array (4).

12. The method one of the preceding claims, wherein the number of correction factors (cf1-2, cf2-3) to be calculated equals the number of calibration image datasets (14, 15, 16) minus 1.

13. A non-transitory computer-readable data storage medium (13) encoded with programming instructions, said storage medium (13) being loaded into a computer system of a magnetic resonance (MR) apparatus (1) that comprises an MR data acquisition scanner (2) having a radio-frequency (RF) transmitter (3), an RF receiver (4), a gradient coil arrangement,
said programming instructions causing said computer system to carry out the method of one of claims 1 to 12.

14. A magnetic resonance apparatus (1) comprising:
- an MR data acquisition scanner (2) comprising a radio-frequency transmitter (3) and an RF receiver (4) and a gradient coil arrangement,
- a memory in which image datasets are stored,
- a computer (12) having access to said memory (13) and being configured to read said image datasets from said memory (13), and
- said computer (12) being configured to carry out the method of one of claims 1 to 12.

## Patentansprüche

1. Computerimplementiertes Verfahren zum Kombinieren von wenigstens einem ersten anatomischen Bilddatensatz (17, 39) eines Subjekts (22) und einem zweiten anatomischen Bilddatensatz (18, 40) desselben Subjekts (22) zu einem kombinierten Bilddatensatz (45), umfassend:
a) Bereitstellen eines ersten Kalibrierungsbilddatensatzes (14) eines ersten Untersuchungsvolumens des Subjekts (22) mit wenigstens zwei Schichten (14a, 14b, 14c, 14d, 14e, 14f),
b) Bereitstellen des ersten anatomischen Bilddatensatzes (17, 39) des ersten Untersuchungsvolumens des Subjekts (22),
c) Bereitstellen eines zweiten Kalibrierungsbilddatensatzes (15) eines zweiten Untersuchungsvolumens des Subjekts (22) mit wenigstens zwei Scheiben (15a, 15b, 15c, 15d, 15e, 15f),
d) Bereitstellen des zweiten anatomischen Bilddatensatzes (18, 40) des zweiten Untersuchungsvolumens des Subjekts (22),
e) wobei die Kalibrierungsbilddatensätze (14, 15, 16) in einer Bildgebungsrichtung (kz) gegeneinander verschoben sind,
**dadurch gekennzeichnet, dass**,
f) eine Frequenzverteilung (32, 37) für einen Parameter wenigstens einer Scheibe (14a, 15a, 15f, 16e) jedes Kalibrierungsbilddatensatzes (14, 15, 16) berechnet wird und wenigstens ein Korrekturfaktor (cfl-2, cf2-3) zum Korrigieren von Signalintensitäten wenigstens eines anatomischen Bilddatensatzes (18, 19, 40, 41) unter Verwendung der Frequenzverteilungen (32, 37) berechnet wird,
g) Generieren eines korrigierten zweiten anatomischen Bilddatensatzes durch Anpassen der Signalintensitäten wenigstens einer Region des zweiten anatomischen Bilddatensatzes (18, 40) unter Verwendung des Korrekturfaktors (cfl-2, cf2-3), und
h) Kombinieren des ersten anatomischen Bilddatensatzes (17, 39) und des korrigierten zweiten anatomischen Bilddatensatzes zu einem kombinierten Bilddatensatz (45)
wobei eine das Subjekt (22) unterstützende Tabelle (9) während der Erfassung der Kalibrierungsbilddatensätze (14, 15, 16) und der jeweiligen anatomischen Bilddatensätze (17, 18, 19, 39, 40, 41) unterschiedliche Positionen aufweist.

2. Verfahren nach Anspruch 1, wobei die Frequenzverteilungen für benachbarte Schichten (14a, 15a, 15f, 16e) von benachbarten Kalibrierungsbilddatensätzen (14, 15, 16) berechnet werden.

3. Verfahren nach einem der vorstehenden Ansprüche, wobei ein Histogramm (32, 27) als Frequenzverteilung verwendet wird.

4. Verfahren nach einem der vorstehenden Ansprüche, wobei der erste Kalibrierungsbilddatensatz (14) und der zweite Kalibrierungsbilddatensatz (15) Bilddatensätze zur Korrektur der Intensität einer Oberflächenspule sind.

5. Verfahren nach einem der vorstehenden Ansprüche, wobei die anatomischen Bilddatensätze (17, 18, 19, 39, 40, 41) unterschiedlichen Kalibrierungsbilddatensätzen (14, 15, 16) zugewiesen sind.

6. Verfahren nach Anspruch 5, wobei der erste anatomische Bilddatensatz (17, 39) einem Korrekturfaktor zugewiesen ist, der den Wert 1 hat.

7. Verfahren nach einem der vorstehenden Ansprüche, wobei wenigstens drei anatomische Bilddatensätze (17, 18, 19, 39, 40, 41) und jeweilige Kalibrierungsbilddatensätze (14, 15, 16) bereitgestellt werden.

8. Verfahren nach einem der vorstehenden Ansprüche, wobei die Berechnung des Korrekturfaktors (cfl-2, cf2-3) unter Verwendung einer benachbarten Schicht (14a, 15a, 15f, 16e) jedes Kalibrierungsbilddatensatzes (14, 15, 16) ausgeführt wird.

9. Verfahren nach einem der vorstehenden Ansprüche, wobei die Signalintensität als Parameter zum Generieren der Frequenzverteilungen (32, 37) verwendet wird.

10. Verfahren nach einem der vorstehenden Ansprüche, wobei die Auflösung der anatomischen Bilddatensätze (17, 18, 19, 39, 40, 41) wenigstens in räumlicher Richtung höher ist als die Auflösung eines Kalibrierungsbilddatensatzes (14, 15, 16).

11. Verfahren nach einem der vorstehenden Ansprüche, wobei die Kalibrierungsbilddatensätze (14, 15, 16) mit unterschiedlichen Untermengen einer Empfangsspulenanordnung (4) erfasst worden sind.

12. Verfahren nach einem der vorstehenden Ansprüche, wobei die Anzahl von zu berechnenden Korrekturfaktoren (cfl-2, cf2-3) gleich der Anzahl von Kalibrierungsbilddatensätzen (14, 15, 16) minus 1 ist.

13. Nicht-transitorisches computerlesbares Datenspeichermedium (13), das mit Programmanweisungen codiert ist, wobei das Datenspeichermedium (13) in ein Computersystem einer Magnetresonanzvorrichtung (MR-Vorrichtung) (1) geladen wird, die einen MR-Datenerfassungsscanner (2) mit einem Hochfrequenzsender (HF-Sender) (3), einem HF-Empfänger (4) und einer Gradientenspulenanordnung umfasst, wobei die Programmieranweisungen das Computersystem veranlassen, das Verfahren nach einem der Ansprüche 1 bis 12 auszuführen.

14. Magnetresonanzvorrichtung (1), umfassend:
- einen MR-Datenerfassungsscanner (2), umfassend einen Hochfrequenzsender (3) und einen HF-Empfänger (4) und eine Gradientenspulenanordnung,
- einen Speicher, in dem Bilddatensätze gespeichert sind,
- einen Computer (12) mit Zugriff auf den Speicher (13) und dazu ausgelegt, die Bilddatensätze aus dem Speicher (13) auszulesen, und
- wobei der Computer (12) dazu ausgelegt ist, das Verfahren nach einem der Ansprüche 1 bis 12 auszuführen.

## Revendications

1. Procédé mis en œuvre par ordinateur de combinaison d'au moins un premier ensemble (17, 39) de données d'image anatomiques d'un sujet (22) et d'un deuxième ensemble (18, 40) de données d'image anatomiques du même sujet (22) en un ensemble (45) combiné de données d'image comprenant :
a) on se procure un premier ensemble (14) d'étalonnage de données d'image d'un premier volume en examen du sujet (22) ayant au moins deux tranches (14a, 14b, 14c, 14d, 14e, 14f),
b) on se procure le premier ensemble (17, 39) de données d'image anatomiques du premier volume en examen du sujet (22),
c) on se procure un deuxième ensemble (15) d'étalonnage de données d'image d'un deuxième volume en examen du sujet (22) ayant deux tranches (15a, 15b, 15c, 15d, 15e, 15f),
d) on se procure le deuxième ensemble (18, 40) de données d'image anatomiques du deuxième volume en examen du sujet (22),
e) dans lequel les ensembles (14, 15, 16) d'étalonnage de données d'image sont décalés l'un par rapport à l'autre dans une direction (kz) d'imagerie,
**caractérisé en ce que**
f) on calcule une distribution (32, 37) de fréquence d'un paramètre d'au moins une tranche (14a, 15a, 15f, 16e) de chaque ensemble (14, 15, 16) d'étalonnage de données d'image, et on calcule, en utilisant la distribution (32, 37) de fréquence, au moins un facteur (cf1-2, cf2-3) de correction pour corriger des intensités de signal d'au moins un ensemble (18, 19, 40, 41) de données d'image anatomiques,
g) on crée un deuxième ensemble de données d'image anatomiques en réglant les intensités de signal d'au moins une région du deuxième ensemble (18, 40) de données d'image anatomiques en utilisant le facteur (cf1-2, cf2-3) de correction, et
h) on combine le premier ensemble (17, 39) de données anatomiques et le deuxième ensemble corrigé de données d'image anatomiques en un ensemble (45) combiné de données d'image,
dans lequel une table (9) supportant le sujet (22) a des positions différentes pendant l'acquisition des ensembles (14, 15, 16) d'étalonnage de données d'image et des ensembles (17, 18, 19, 39, 40, 41) de données d'image anatomiques respectifs

2. Procédé suivant la revendication 1, dans lequel on calcule les distributions de fréquence pour des tranches (14a, 15a, 15f, 16e) voisines d'ensembles (14, 15, 16) d'étalonnage voisins de données d'image.

3. Procédé suivant l'une des revendications précédentes, dans lequel on utilise un histogramme (32, 27) comme distribution de fréquence.

4. Procédé suivant l'une des revendications précédentes, dans lequel le premier ensemble (14) d'étalonnage de données d'image et le deuxième ensemble (15) d'étalonnage de données d'image sont des ensembles de données d'image pour une correction d'intensité de bobine de surface.

5. Procédé suivant l'une des revendications précédentes, dans lequel on affecte les ensembles (17, 18, 19, 39, 40, 41) de données d'image anatomiques à des ensembles (14, 15, 16) d'étalonnage de données d'image différents.

6. Procédé suivant la revendication 5, dans lequel on affecte le premier ensemble (37, 39) de données d'image anatomiques à un facteur de correction de 1.

7. Procédé suivant l'une des revendications précédentes, dans lequel on se procure au moins trois ensembles (17, 18, 19, 39, 40, 41) de données d'image anatomiques et des ensembles (14, 15, 16) respectifs d'étalonnage de données d'image.

8. Procédé suivant l'une des revendications précédentes, dans lequel on effectue le calcul du facteur (cf1-2, cf2-3) de correction en utilisant une tranche (14a, 15a, 15f, 16e) voisine de chaque ensemble (14, 15, 16) d'étalonnage de données d'image.

9. Procédé suivant l'une des revendications précédentes, dans lequel on utilise l'intensité de signal comme paramètre pour créer les distributions (32, 37) de fréquence.

10. Procédé suivant l'une des revendications précédentes, dans lequel la résolution des ensembles (17, 18, 19, 39, 40, 41) de données d'image anatomiques est plus grande dans au moins une direction de l'espace que la résolution d'un ensemble (14, 15, 16) d'étalonnage de données d'image.

11. Procédé suivant l'une des revendications précédentes, dans lequel les ensembles (14, 15, 16) d'étalonnage de données d'image ont été acquis avec des sous-ensembles différents d'un réseau (4) de bobine de réception.

12. Procédé suivant l'une des revendications précédentes, dans lequel le nombre de facteurs (cf1-2, cf2-3) de correction à calculer est égal au nombre d'ensembles (14, 15, 16) d'étalonnage de données d'image moins 1.

13. Support (13) de mise en mémoire de données non transitoire, déchiffrable par ordinateur et codé par des instructions de programmation, le support (13) de mise en mémoire étant chargé dans un système d'ordinateur d'une installation (1) de résonnance magnétique (RM), qui comprend un scanner (2) d'acquisition de données RM, ayant un émetteur (3) en fréquence radio (FR), un récepteur (4) FR, un agencement à bobine de gradient,
les instructions de programmation faisant que le système d'ordinateur effectue le procédé suivant l'une des revendications 1 à 12.

14. Installation (1) à résonnance magnétique comprenant :
- un scanner (2) d'acquisition de données RM comprenant un émetteur (3) en fréquence radio et un récepteur (4) FR et un agencement à bobine de gradient,
- une mémoire dans laquelle sont mis des ensembles de données d'image,
- un ordinateur (12) ayant accès à la mémoire (13) et configuré pour lire les ensembles de données d'image dans la mémoire (13), et
- l'ordinateur (12) étant configuré pour effectuer le procédé suivant l'une des revendications 1 à 12.
